# EUROPEAN PATENT SPECIFICATION

(11) **EP 0 887 521 B1**
(45) Date of publication and mention of the grant of the patent: **03.09.2003**
(21) Application number: 98304963.6
(22) Date of filing: 24.06.1998
(51) Int. Cl.: F01N 3/28, B01J 35/04

(54) **Catalyst converter**
Katalysator
Convertisseur catalytique

(30) Priority: 24.06.1997 JP 16744697; 24.06.1997 JP 16743697
(43) Date of publication of application: 30.12.1998
(73) Proprietor: Calsonic Kansei Corporation, Tokyo (JP)
(72) Inventor: Nagura, Haruhiko, Nakano-ku, Tokyo (JP); Tanabe, Hiroshi, Nakano-ku, Tokyo (JP)
(74) Representative: Abbie, Andrew Kenneth

(56) References cited:
- DE-A- 3 844 350
- US-A- 4 793 136
- US-A- 5 110 561
- US-A- 5 130 100
- US-A- 5 177 960
- US-A- 5 323 608
- PATENT ABSTRACTS OF JAPAN vol. 013, no. 569 (C-666), 15 December 1989 & JP 01 236948 A (MAZDA MOTOR CORP), 21 September 1989

## Description

The present invention relates to a catalyst, or catalytic, converter, and particularly but not exclusively, to a catalyst converter which is provided in an exhaust system of a vehicle, etc. to purify hazardous components in the exhaust gas passing therethrough by virtue of catalytic reaction.

A conventional catalyst converter, as disclosed in Patent Application Publication (KOKAI) Hei 1-236948, has an outer cylinder and a honeycomb core installed in the outer cylinder. Such honeycomb core is formed by stacking catalyst carriers, or catalyst carrier sheets, each made of a corrugated metal thin plate. Respective cells are formed between stacked portions of the catalyst carriers.

According to the conventional catalyst converter, generation of the so-called film-out phenomenon can be suppressed. Where the "film-out phenomenon" means such a phenomenon that the catalyst carriers, when receive a flow-in pressure of the exhaust gas are caused to project backward in a spiral manner from a center portion.

However, in the conventional catalyst converter, the so-called aperture opening phenomenon has readily occurred in the core. Where the "aperture opening phenomenon" means such a phenomenon that stacked catalyst carriers are separated mutually when the core receives a pressure of the exhaust gas at the inlet side. Especially, if the catalyst converter is provided in vicinity of the exhaust manifold, the above aperture opening phenomenon has become remarkable and there has been a possibility that the purification performance of the exhaust gas is degraded.

US-A-5323608 discloses a catalytic converter comprising:
a cylindrical member having an inlet and an outlet;
a spirally wound catalyst carrier core provided in the cylindrical member, defining a plurality of cells on a fluid flow path between the inlet and the outlet; and
an engaging plate engaging with respective inlet side portions of the core for preventing axial and rotational movement of the core in the cylindrical member.

US-A-4793136 discloses a catalytic converter comprising:
a cylindrical member having an inlet, an outlet and an inner surface defining an inner space of the cylindrical member;
partition means extending between portions of the inner surface to partition the inner space into first, second and third segments, each of said segments communicating with said inlet and said outlet;
wherein provided in the segments are a respective plurality of catalyst carrier sheets disposed in substantially parallel relationship such that each sheet extends between respective portions of the inner surface, and adjacent sheets in respective segments define a plurality of cells therebetween on a fluid flow path between the inlet and the outlet.

It is an object of the present invention to provide a catalyst converter for preventing or at least mitigating aperture opening phenomenon of a core and also improving purification performance of the exhaust gas.

The present invention provides a catalytic converter comprising:
a cylindrical member having an inlet, an outlet and an inner surface; and
a core comprising a plurality of catalyst carrier sheets provided in the cylindrical member and arranged in substantially parallel relationship such that each sheet extends between portions of the inner surface, and adjacent said sheets define a plurality of cells therebetween on a fluid flow path between the inlet and the outlet;
characterised by: an engaging plate engaging with and extending between respective inlet side portions of the sheets for maintaining a predetermined relative orientation of said sheets to prevent an aperture opening phenomenon of the core; and the sheets intersecting substantially orthogonally with the engaging plate.

A tooth portion of the engaging plate may be welded to the inlet side portions of the sheets.

Preferably, the cylindrical member has two opposing slits in respective inlet end edges thereof, and
the engaging plate is welded into the slits.

The sheets may be folded to form S-shapes.

Advantageously, each sheet is shaped to provide a plurality of first ridge portions and a plurality of first groove portions, wherein
the first ridge portions are folded to protrude on one side of the sheet and extend along a first direction,
the first groove portions are folded to protrude on the other side of the sheet and extend along said first direction,
the first ridge portions and the first groove portions are arranged alternatively along a second direction intersecting with the first direction to form a corrugated shape,
the first ridge portions have second groove portions, each of which is partitioned by two cuttings separated at a distance in the first direction and then folded to protrude partially on said other side of the sheet, and
the first groove portions have second ridge portions, each of which is partitioned by two cuttings separated at a distance in the first direction and then folded to protrude partially on said one side of the sheet.

In one arrangement, the first ridge portions and the second ridge portions protrude to substantially the same extent on said one side of the sheet, and
the first groove portions and the second groove portions protrude to substantially the same extent on said other side of the sheet.

Flat portion may be arranged between the first ridge portions and the first groove portions and extend along the first direction to connect adjacent first ridge and first groove portions.

End portions of the cuttings for partitioning the second ridge portions may be positioned on boundary portions between the first ridge portions and the flat portions, and end portions of the cuttings for partitioning the second groove portions may be positioned on boundary portions between the first groove portions and the flat portions.

Advantageously, a plurality of the second ridge portions and a plurality of the second groove portions are provided along the first direction, respectively.

It may be useful if a predetermined distance is provided between the end portions of the cuttings for partitioning the second ridge portions and the end portions of the cuttings for partitioning the second groove portions along the first direction.

The present invention also provides a catalytic converter comprising:
a cylindrical member having an inlet, an outlet and an inner surface defining an inner space of the cylindrical member;
partition means extending between portions of the inner surface to partition the inner space into a first container space and a second container space, each of said spaces communicating with said inlet and said outlet;
wherein provided in the first container space is a first core comprising a first plurality of catalyst carrier sheets disposed in substantially parallel relationship, adjacent sheets of said first plurality of sheets defining a plurality of cells therebetween on a fluid flow path between the inlet and the outlet; and
wherein provided in the second container space is a second core comprising a second plurality of sheets disposed in substantially parallel relationship, adjacent sheets of said second plurality of sheets defining a plurality of cells therebetween on a fluid flow path between the inlet and the outlet;
characterised in that: each sheet of said first plurality of sheets extends between the inner surface and the partition means; each sheet of said second plurality of sheets extends between the inner surface and the partition means; the first and second sheets intersect substantially orthogonally with the partitioning member; and the arrangement prevents an aperture opening phenomenon of and/or improves purification performance of exhaust gas from the first and the second cores.

The partitioning member may have communication means for allowing communication between the first and second container spaces.

In a first arrangement, the partitioning member is made of thin metal plates, and
the connection means is a clearance formed between the plates.

In a second arrangement, the partitioning member is made of a metal thin plate, and
the connection means are connection holes formed in the metal thin plate.

In a third arrangement, the partitioning member is made of a mesh material.

The partitioning member may have catalyst on its surface.

The first and second sheets may be folded to form S-shapes.

Advantageously, each of the sheets of the first and the second plurality of sheets have first ridge portions and first groove portions, wherein
the first ridge portions are folded to protrude on one side of the sheet and extend along a first direction,
the first groove portions are folded to protrude on the other side of the sheet and extend along said first direction,
the first ridge portions and the first groove portions are arranged alternatively along a second direction intersecting with the first direction to form a corrugated shape,
the first ridge portions have second groove portions, each of which is partitioned by two cuttings separated at a distance in the first direction and then folded to protrude partially on said other side of the sheet, and
the first groove portions have second ridge portions, each of which is partitioned by two cuttings separated at a distance in the first direction and then folded to protrude partially on said one side of the sheet.

In order that the present invention may be well understood, four embodiments thereof, which are given by way of example only, will now be described with reference to the accompanying drawings, in which:
FIG.1 is a schematic sectional view, take along a line I-I in FIG.2, showing a catalyst converter according to a first embodiment of the present invention;
FIG.2 is a schematic view showing an overall configuration of the catalyst converter in FIG.1;
FIG.3 is a plan view showing an engaging plate in FIG.1;
FIG.4 is a perspective view showing a catalyst carrier as a first example in FIG.1;
FIG.5A is a plan view showing the catalyst carrier as the first example in FIG.4;
FIG.5B is a sectional view showing the catalyst carrier in FIG.5A taken along a line XB-XB;
FIG.6A is a plan view showing a second example of a catalyst carrier which is different from that in FIG.5A;
FIG.6B is a sectional view showing the catalyst carrier in FIG.6A taken along a line XIB-XIB;
FIG.7A is a plan view showing a third example of a catalyst carrier which is different from that in FIG.5A;
FIG.7B is a sectional view showing the catalyst carrier in FIG.7A taken along a line XIIB-XIIB;
FIG.8A is a plan view showing a fourth example of a catalyst carrier which is different from that in FIG.5A;
FIG.8B is a sectional view showing the catalyst carrier in FIG.8A taken along a line XIIIB-XIIIB;
FIG.9 is a schematic sectional view, take along a line I-I in FIG.10, showing a catalyst converter according to a second embodiment of the present invention;
FIG.10 is a schematic view showing an overall configuration of the catalyst converter in FIG.9;
FIG.11 is a schematic sectional view showing a catalyst converter according to a third embodiment of the present invention; and
FIG.12 is a schematic sectional view showing a catalyst converter according to a fourth embodiment of the present invention.

A first embodiment of the present invention will be explained in detail with reference to the accompanying drawings hereinafter.

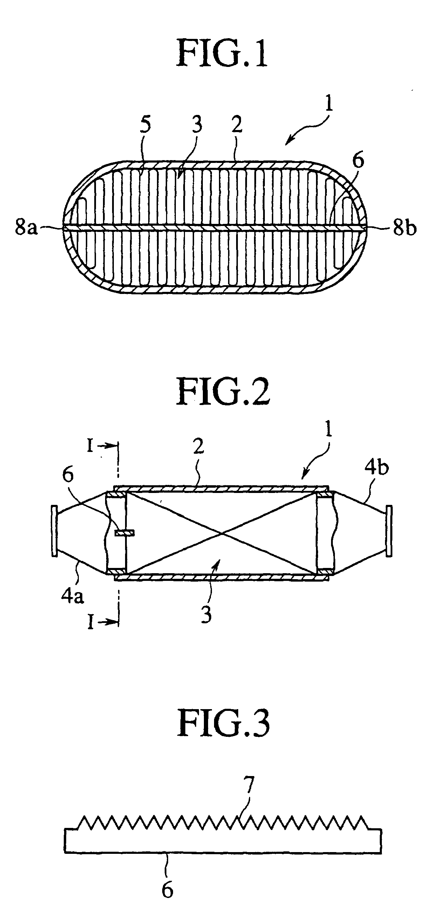

In FIGS. 1 to 3, a catalyst converter 1 has an outer metal cylinder 2, or cylindrical member, and a honeycomb core 3. The outer cylinder 2 has an elliptic sectional shape with an inlet and an outlet. The honeycomb core 3 is installed in the outer cylinder 2.

Diffusers 4a, 4b which are formed separately from the outer cylinder 2 are provided at both ends (inlet and outlet) of the outer cylinder 2. The diffusers 4a, 4b can be fixed when they are fitted into both end portions of the outer cylinder 2. The honeycomb core 3 is made up of a plurality of catalyst carrier sheets 5 and is installed in the outer cylinder with the catalyst carrier sheets extending in substantially parallel relationship such that each sheet extends between portions of the inner surface of the outer cylinder 2. Each of the catalyst carriers 5 holds catalyst in a surface of the metal thin plate. Such metal thin plate is made of stainless steel and is corrugated by means of press molding.

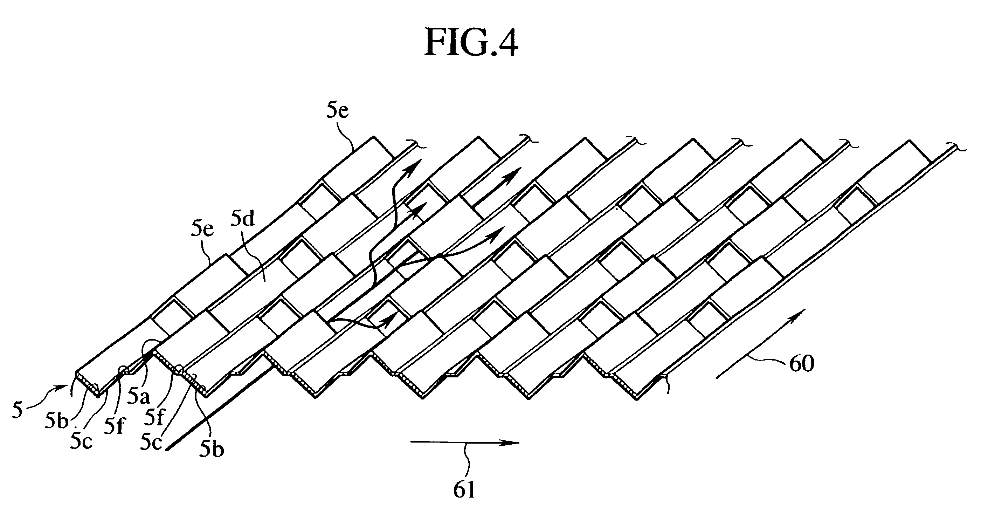

As shown in FIG. 4, each of the catalyst carriers 5 has a plurality of ridge portions (first ridge portions) 5a and a plurality of root portions (first groove portions) 5b. Herein, reference to root and root portions can be understood as meaning groove or groove portions. The ridge portions 5a are folded to protrude toward one surface side of the catalyst carrier 5 and extend in the first direction 60. The root portions 5b are folded to protrude toward the other surface side of the catalyst carrier 5 and extend in substantially parallel with the ridge portions 5a in the first direction 60. The ridge portions 5a and the root portions 5b are arranged alternatively to form corrugations.

The core 3 is made up of a plurality of sheets of catalyst carriers 5. Each of the catalyst carriers 5 is folded successively such that a sectional shape taken along the second direction 61 perpendicular to the first direction 60 is formed like S-shapes. Consequently, respective linear portions of the catalyst carriers 5 are superposed so as to form a plurality of cells between the catalyst carriers 5 on a fluid flow path between the inlet and the outlet of the outer cylinder.

In this event, the honeycomb core 3 may be constructed by laminating plural sheets of catalyst carriers.

The honeycomb core 3 is installed in the outer cylinder 2. The exhaust gas may flow from the diffuser 4a provided at the inlet side of the outer cylinder 2, then passes through the cells of the honeycomb core 3, and then flows out from the diffuser 4b provided at the outle side of the outer cylinder 2.

A metal engaging plate 6 made of stainless steel, etc. is provided on an end side edge on the inlet side of the catalyst carrier 5 (i.e. at respective inlet side portions of the catalyst carrier sheets 5) for maintaining a predetermined relative orientation of said sheets 5. In a center portion on the inlet side of the honeycomb core the engaging plate 6 extends along the direction intersecting orthogonally with the linear portions of the catalyst carriers 5 (major axis direction of the outer cylinder 2 in this embodiment). A tooth portion 7 is formed on one side edge of the engaging plate 6. The tooth portion 7 is inserted into the cells of the honeycomb core 3 to engage with an end edge on the inlet side of the catalyst carriers 5. Mutual separation of the linear portions of neighboring catalyst carriers 5 can be suppressed by the tooth portion 7.

The tooth portion 7 of the engaging plate 6 and the end edge on the inlet side of the catalyst carriers 5 are simply engaged in this embodiment, such engaging portion may be welded by brazing, etc.

Respective opposing slits 8a, 8b are provided in the inlet end edges in the major axis direction of the outer cylinder 2. End portions of engaging plate 6 are fitted into the slits 8a, 8b and then welded thereto. In this case, the engaging plate 6 may be simply fitted into the slits 8a, 8b.

Next, the catalyst carrier 5 employed in this embodiment and catalyst carriers 21, 22, 23 according to modifications of the present invention will be explained hereunder.

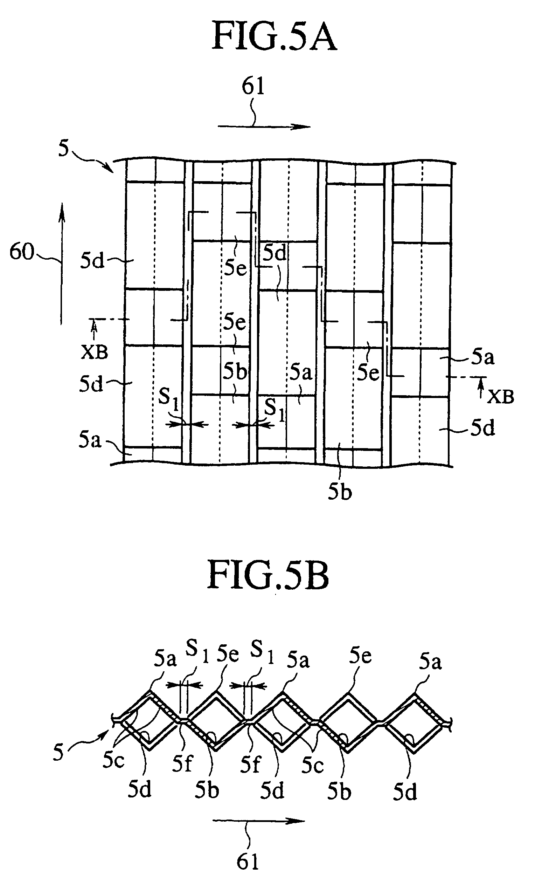

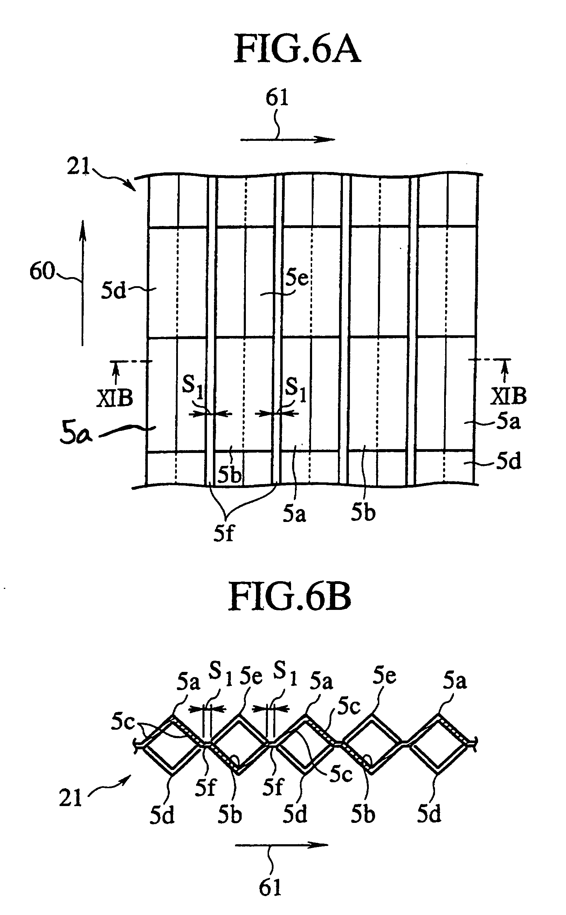

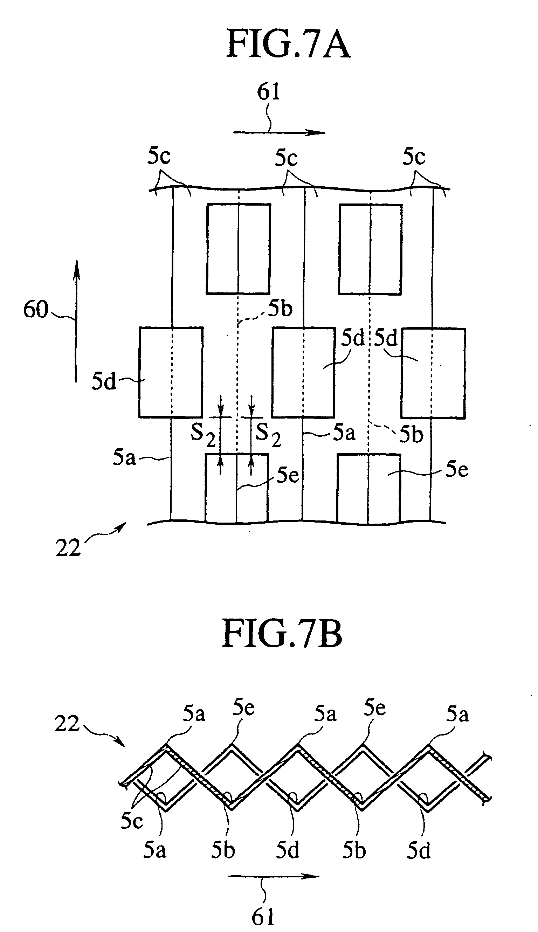

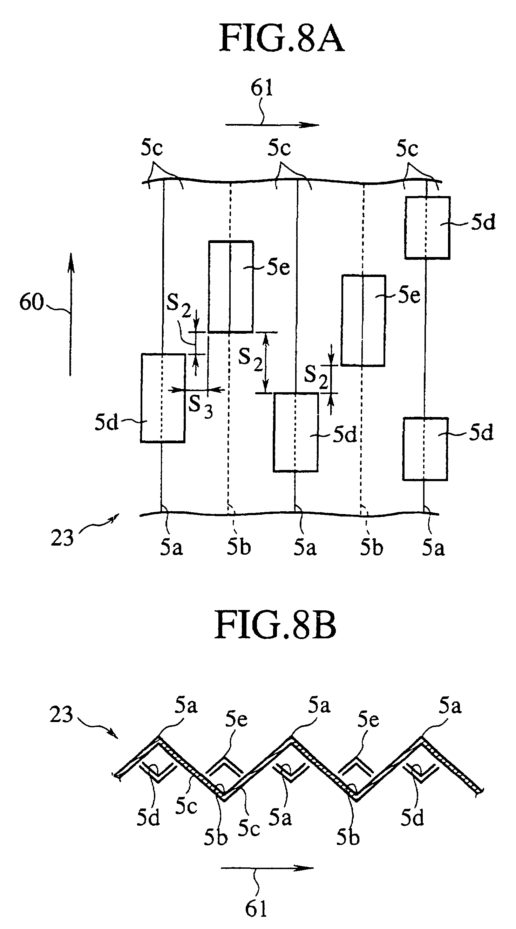

As modifications of the catalyst carrier 5, a catalyst carrier 21 shown in FIGS.6A, 6B, a catalyst carrier 22 shown in FIGS.7A, 7B, and a catalyst carrier 23 shown in FIGS.8A, 8B may be provided. The catalyst carrier 5 shown in FIGS.4, 5A, 5B as a first example, the catalyst carrier 21 shown in FIGS.6A, 6B as a second example, the catalyst carrier 22 shown in FIGS.7A, 7B as a third example, and the catalyst carrier 23 shown in FIGS.8A, 8B as a fourth example will be explained hereunder.

All the catalyst carriers 5, 21, 22, 23 in the first to fourth examples have corrugated first ridge portions 5a and corrugated first root, or groove, portions 5b. In addition, a plurality of rising-up root portions (second groove portions) 5d are provided to the ridge portions 5a along the first direction 60, and similarly a plurality of rising-up ridge portions (second ridge portions) 5e are provided to the root portions 5b along the first direction 60. Respective rising-up root portions 5d are formed by rising up (i.e. pressing out) a part of the ridge portions 5a, which are separated by two cuttings separated in the first direction 60, so as to protrude in the opposite direction of the ridge portion 5a (on the other side of the catalyst carrier 5). Respective rising-up ridge portions 5e are formed by rising up (i.e. pressing out) a part of the root portions 5b, which are separated by two cuttings separated in the first direction 60, so as to protrude in the opposite direction of the root portion 5b (on one side of the catalyst carrier 5). Respective cuttings extend along the projection direction of the ridge portions 5a and the root portions 5b from middle positions of slant walls, or flat portions, 5c constituting the ridge portions 5a and the root portions 5b.

The catalyst carriers 5, 21 in the first and second examples have rack portions 5f which are formed in center positions of the slant walls 5c so as to extend along the first direction 60 respectively. The rising-up ridge portions 5e are risen up from the boundary between the ridge portions 5b and the rack portions 5f. Respective rising stop ends of neighboring rising-up root portions 5d and rising-up ridge portions 5e are separated by a distance S1 equivalent to a width of the rack portion 5f along the first direction 60.

In the first example, the ridge portions 5a and the rising-up ridge portions 5e are formed to have the same length. The ridge portions 5a and the rising-up ridge portions 5e are arranged based on such regularity that they are aligned linearly along the direction intersecting obliquely with the first and second directions 60, 61.

In the second example, the ridge portions 5a and the root portions 5b, and the rising-up root portions 5d, the rising-up ridge portions 5e are formed to have the same length. The ridge portions 5a and the rising-up ridge portions 5e, and the root portions 5b and the rising-up root portions 5d are arranged based on such regularity that they are aligned linearly along the second direction 61.

In the third and fourth examples, adjacent rising-up root portions 5d and rising-up ridge portions 5e are offset in the first direction 60. Respective rising stop ends of adjacent rising-up root portions 5d and rising-up ridge portions 5e are separated by a predetermined distance S2 in the first direction 60.

In the third example shown in FIGS.7A, 7B, the rising-up root portions 5d and the rising-up ridge portions 5e are risen up from center positions of corrugated slant walls 5c in the opposite direction respectively.

In the fourth example shown in FIGS.8A, 8B, the rising-up root portions 5d are protruded lower than corrugated root portions 5b and the rising-up ridge portions 5e are protruded lower than corrugated ridge portions 5a. Therefore, respective rising stop ends of adjacent rising-up root portions 5d and rising-up ridge portions 5e are separated by a distance S2 in the second direction 61 and also separated by a distance S3 in the first direction 60.

In turn, an operation of the catalyst converter according to the first embodiment of the present invention will be explained hereunder.

The exhaust gas flows into the catalyst converter 1 from an exhaust pipe (not visible) having a diameter smaller than the honeycomb core 3. The exhaust gas is spread over an entire area of the inlet side of the honeycomb core 3 because of a diffusion action of an inlet side diffuser 4a to flow into the cell. However, since the diffusion action of the inlet side diffuser 4a is not always sufficient, the exhaust gas flowing from the exhaust pipe may concentrate at the center area of the core 3, so that the stacked catalyst carriers 5 tend to separate one from another (i.e mutually at the center area of the core 3.

According to the first embodiment, as described above, separation of the linear portions of the stacked catalyst carriers 5 can be suppressed by the metal engaging plate 6 at the center area of the inlet side of the core 3. Therefore, the aperture opening phenomenon, in which the catalyst carriers 5 are separated mutually at the center area of the core 3 because of flow-in pressure of the exhaust gas, can be prevented. Hence, the honeycomb profile in the core 3 is less likely to deform, and thus the cells in the core 3 hold their desired shapes. As a result, purification performance of the exhaust gas can be improved.

Since the tooth portion 7 of the engaging plate 6 and the catalyst carriers 5 are welded, rigidity of end portions of the inlet side catalyst carriers 5 in the core 3, which receive the flow-in pressure of the exhaust gas, can be enhanced. Therefore, endurance of the core 3 can be improved.

End portions of the engaging plate 6 are fitted into the slits 8a, 8b provided at the side ends of the outer cylinder 2 and then welded thereto. For this reason, the engaging plate 6 is never shifted and as a result the aperture opening of the core 3 can be surely prevented.

The honeycomb core 3 is formed by folding successively a sheet of catalyst carrier 5 to form S-shapes and then stacking the folded catalyst carrier 5 to form a honeycomb structure. Therefore, the film-out phenomenon that the catalyst carrier 5 is projected out backward by the flow-in pressure of the exhaust gas can be prevented.

As described above, the catalyst carrier 5 employed in this embodiment and the catalyst carriers 21, 22, 23 (second, third, and fourth examples) in the modifications have a plurality of rising-up root portions 5d risen up from the ridge portion 5a and a plurality of rising-up ridge portions 5e risen up from the root portion 5b. In this manner, because the rising-up ridge portions 5e and the rising-up root portions 5d are formed, respective cuttings of the ridge portion 5a and the root portion 5b are opened. For this reason, as shown in FIG.4, the exhaust gas flowing along the first direction 60 passes through the opened cuttings and then flows to thread a passage between one face and the other face of the catalyst carrier 5 (21, 22, 23). Hence, since the exhaust gas can contact sufficiently with catalyst on one face and the other face of the catalyst carrier 5, catalytic reaction can be made more active.

Because of the presence of the rising-up root portions 5d and the rising-up ridge portions 5e, mutual tight contact of adjacent catalyst carriers 5 can be prevented. Therefore, the cells can be firmly formed between adjacent catalyst carriers 5.

As a result, purification performance of the exhaust gas can be further improved.

Since the exhaust gas can pass through the opened cuttings and flow to thread the passage between one face and the other face of the catalyst carrier 5 (21, 22, 23), pressure distribution of the exhaust gas can be spread substantially uniformly overall area of the core 3 and thus endurance of the core 3 can be improved.

Since the rising-up root portions 5d and the rising-up ridge portions 5e are formed, rigidity of the catalyst carriers 5 itself can be enhanced so that quality and reliability can be improved.

Particularly, in the catalyst carrier 5 in the first example or the catalyst carrier 21 in the second example, the rising-up root portions 5d and the rising-up ridge portions 5e are risen up from the boundary between the rack portions 5f formed at the center positions of the slant walls 5c and them. Therefore, risen-up opening areas of the rising-up root portions 5d and the rising-up ridge portions 5e can be increased; so that circulation of the exhaust gas through the cells can be improved.

Projection height of the ridge portions 5a and the rising-up ridge portions 5e are set substantially equal and also projection height of the corrugated root portions 5b and the rising-up root portions 5d are set substantially equal. Therefore, mutual tight contact between the catalyst carriers 5 can be surely prevented.

A distance S1 equivalent to a width of the rack portion 5f along the second direction 61 can be ensured between respective rising stop ends of adjacent rising-up root portions 5d and rising-up ridge portions 5e. Therefore, breaking caused between rising stop ends due to difference in the coefficient of thermal expansion can be avoided.

In the catalyst carrier 22 in the third example, exhaust gas purification performance as in the first and second examples can be obtained. A predetermined distance S2 along the first direction 60 can be provided between respective rising stop ends of the rising-up root portions 5d and the rising-up ridge portions 5e. Therefore, breaking caused between the rising stop ends due to difference in the coefficient of thermal expansion can be avoided.

In the catalyst carrier 23 in the fourth example, exhaust gas purification performance as in the first to third examples can be obtained. The predetermined distance S2 along the second direction 61 and the predetermined distance 53 along the first direction 60 are set between respective rising stop ends of the rising-up root portions 5d and the rising-up ridge portions 5e. Therefore, breaking caused between the rising stop ends due to difference in the coefficient of thermal expansion can be avoided without fail.

A plurality of engaging plates may be arranged at an appropriate distance. Consequently, the catalyst carriers 5 can be clamped surely mutually.

Next, a second embodiment of the present invention will be explained in detail with reference to the accompanying drawings hereinafter. The same references are assigned to the same constituent parts as those in the first embodiment and their explanation will be omitted.

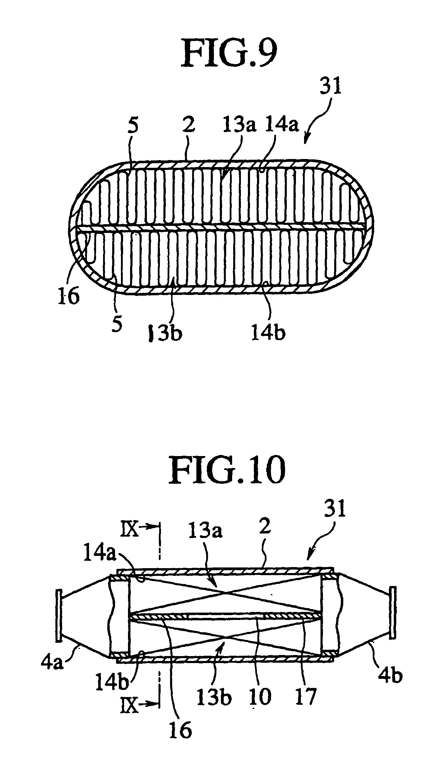

In FIGS.9, 10, a catalyst converter 31 comprises a metal outer cylinder, or cylindrical member, 2 having an elliptic sectional shape, first and second honeycomb cores 13a, 13b, and partition means made up of two sheets of partition plates 16, 17 each extending between portions of an inner surface of the outer cylinder 2 for partitioning the interior space of the outer cylinder 3 into first and second container spaces 14a, 14b being arranged as two upper and lower stages respectively, and each of the container spaces communicating with the inlet and outlet of the outer cylinder 2.

Respective partition plates 16, 17 are formed of metal thin plates made of stainless steel, etc. The partition plates 16, 17 cross center portions of the outer cylinder 2 horizontally in the figures (along the passing direction of the exhaust gas). The partition plates 16, 17 are welded to the inner surface of the outer cylinder 2.

As with the first embodiment, the cores 13a, 13b are made up of a plurality of sheets of catalyst carriers 5, respectively. The first and second plurality of sheets in respective first and second container spaces are each disposed in substantially parallel relationship such that each sheet extends between a portion of the inner surface of the outer cylinder and the partition means. The catalyst carrier 5 is formed to hold catalyst on a surface of the metal thin plate which is made of a stainless steel, etc. corrugated by press molding. The catalyst carrier 5 is folded successively such that a sectional shape taken along the second direction 61 (see FIG.4) shows S-shapes, so that the linear portions of adjacent catalyst carriers 5 are superposed to form a plurality of cells therebetween on a third flow path between the inlet and the outlet of the cylinder 2. The first and second cores 13a, 13b are installed in the first and second container spaces 14a, 14b respectively under the condition that the linear portions of the catalyst carrier 5 are substantially orthogonally intersected with the partition plate 16.

Two sheets of partition plates 16, 17 are arranged substantially linearly at a predetermined distance. As a result, a connection portion, or communication means, 10 for connecting the first and second container spaces 14a, 14b is formed between the partition plates 16, 17.

In the second embodiment, the first and second cores 13a, 13b are installed in the first and second container spaces 14a, 14b which are partitioned by the partition plates 16, 17, and the linear portions of the catalyst carrier 5 extends in the direction intersecting with the partition members. Therefore, if the above catalyst converter is compared with the catalyst converter in which the partition plates 16, 17 are not provided and one core is installed in one container space, lengths of the linear portions of the catalyst carrier 5 can be reduced to half and therefore deflection rigidity of the linear portions of the catalyst carrier 5 can be enhanced.

Accordingly, the aperture opening phenomenon that the catalyst carriers 5 are separated one from another (i.e. mutually) by the flow-in pressure of the exhaust gas flowing into the inlet side end face of the cores 13a, 13b can be prevented . Hence, the honeycomb profiles in the cores 13a, 13b are unlikely to deform, and thus the cells in the cores 13a, 13b hold their desired shapes. As a result, purification performance of the exhaust gas can be improved.

The connection portion 10 is formed between two sheets of partition plates 16, 17. The exhaust gas passes through the connection portion 10 and then flows freely through the first and second cores 13a, 13b positioned vertically adjacently to each other. Consequently, the exhaust gas can be distributed substantially uniformly into the cores 13a, 13b, so that catalytic reaction can be made more active. As a result, purification performance of the exhaust gas can be further improved. The pressure distribution of the exhaust gas can be spread substantially uniformly overall areas of the cores 13a, 13b, and therefore endurance of the cores 13a, 13b can be improved.

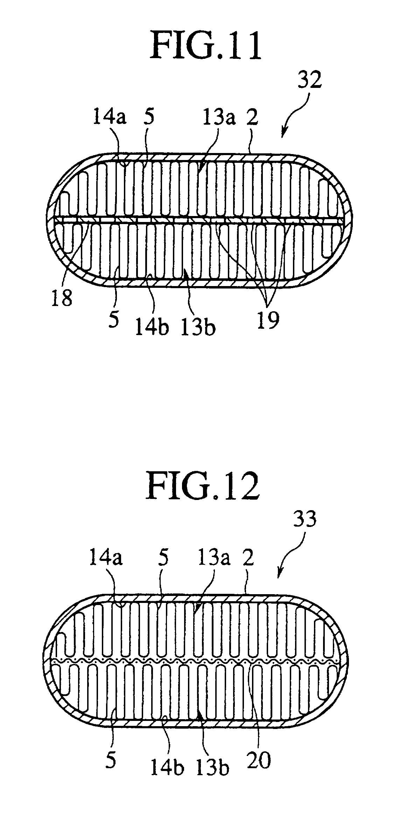

Next, a third embodiment of the present invention will be explained in detail with reference to FIG.11 hereinafter.

In a catalyst converter 32 according to the third embodiment, a sheet of partition plate 18 is provided in place of the partition plates 16, 17 in the second embodiment. The same references are assigned to the same constituent parts as those in the second embodiment and their explanation will be omitted.

The partition plate 18 is composed of a metal thin plate such as stainless steel in which a plurality of connection holes, or communication means, 19 are formed.

According to the third embodiment, like the second embodiment, purification performance of the exhaust gas and endurance of the cores 13a, 13b can be improved.

In addition, since merely one sheet of the partition plate 18 is employed, the third embodiment is advantageous in cost rather than the second embodiment.

Next, a fourth embodiment of the present invention will be explained in detail with reference to FIG.12 hereinafter.

In a catalyst converter 33 according to the fourth embodiment, a mesh material 20 is provided in place of the partition plates 16, 17 in the second embodiment. The same references are assigned to the same constituent parts as those in the second embodiment and their explanation will be omitted.

The mesh material 20 is made of metal such as stainless steel and has a number of meshes, or communication means.

According to the fourth embodiment, since the linear portions of the catalyst carrier 5 can be reduced short and the exhaust gas can flow between two cores 13a, 13b via the meshes of the mesh material 20, purification performance of the exhaust gas and endurance of the cores 13a, 13b can be improved, like the second embodiment.

In addition, since merely one sheet of the mesh member 20 is employed, the fourth embodiment is advantageous in cost rather than the second embodiment.

In the second to fourth embodiments, if the catalyst is held on surfaces of the partition plates 16, 17, 18, 20, catalytic reaction can be made more active on the partition plates 16, 17, 18, 20. As a result, purification performance of the exhaust gas can be further improved.

The partition plates 16, 17, 18, 20 may be merely put into an inner surface of the outer cylinder 2 to be secured thereto.

The container spaces 14a, 14b are not limited to two but instead, third, fourth or a multiplicity of container spaces may be provided, as required. Since lengths of the linear portions of the catalyst carrier 5 can be reduced if the number of such stage is increased, the aperture opening can be prevented much more effectively.

Moreover, instead of the catalyst carrier 5 in the first example, the catalyst carriers 21, 22, 23 may be employed in the second to fourth examples.

There will now be provided a summary of the advantageous features of the embodiments. In the first embodiment, there is provided a catalyst converter comprising:
a honeycomb core made of a corrugated catalyst carrier, the catalyst carrier having adjacent linear portions which extend in substantially parallel to overlap with each other so that cells are partitioned between the adjacent linear portions;
an outer cylinder for containing the honeycomb core therein, the outer cylinder having an inlet and an outlet, and a gas flowing in from the inlet and then flowing into the cells from an inlet side end edge of the catalyst carrier and then flowing out from the outlet; and
a metal engaging plate for suppressing mutual separation and shift of the adjacent linear portions, the engaging plate being provided on the inlet side end edge of the catalyst carrier so as to extend in a direction intersecting with the linear portions of the catalyst carrier, and the engaging plate having a tooth portion which engages with the inlet side end edge of the catalyst carrier.

The engaging plate may extend in the direction intersecting substantially orthogonally with the linear portions of the catalyst carrier.

The tooth portion of the engaging plate and the inlet side end edge of the catalyst carrier are welded.

The outer cylinder has two opposing slits at the inlet end edge, and
the engaging plate is put into the slits and then welded thereto.

In each of the second to fourth embodiments, there is provided a catalyst converter comprising:
first and second honeycomb cores, the first and second honeycomb cores being made of first and second corrugated catalyst carriers respectively, the first and second catalyst carriers having first and second adjacent linear portions which extend in substantially parallel to overlap with each other so that first cells are partitioned between the first adjacent linear portions and second cells are partitioned between the second adjacent linear portions;
an outer cylinder for containing the first and second honeycomb cores therein, the outer cylinder having an inlet and an outlet; and
a metal partitioning member for partitioning an interior of the outer cylinder into first and second container spaces, both the first and second container spaces being connected to the inlet and the outlet respectively, the first and second honeycomb cores being arranged in the first and second container spaces respectively such that the first and second linear portions extend in a direction intersecting with the partitioning member, and a gas flowing in from the inlet and then flowing into the cells from an inlet side end faces of the first and second cores and then flowing out from the outlet.

The first and second linear portions may intersect substantially orthogonally with the partitioning member.

The partitioning member has a connection portion for connecting the first and second container spaces, as shown in the second embodiment.

The partitioning member may be made of metal thin plates, and the connection portion may be a clearance formed between the metal thin plates.

In the third embodiment, the partitioning member is made of a metal thin plate, and
the connection portion is a connection hole formed on the metal thin plate.

In the fourth embodiment, the partitioning member is made of a mesh material.

The partitioning member has catalyst on its surface.

The catalyst carrier is folded successively like S-shapes and the first catalyst carrier has first concave portions and second concave portions,
the first concave portions are folded to protrude on one face side of the catalyst carrier and extend along the first direction,
the second concave portions are folded to protrude on other face side of the catalyst carrier and extend along the first direction,
the first concave portions and the second concave portions are arranged alternatively along a second direction intersecting with the first direction to form the corrugations,
the first concave portions have third concave portions which are partitioned by two cuttings separated at a distance along the first direction and folded to protrude partially to other face side of the catalyst carrier, and
the second concave portions have fourth concave portions which are partitioned by two cuttings separated at a distance along the first direction and folded to protrude partially to one face side of the catalyst carrier.

In Figures 4 to 6, the first concave portions and the fourth concave portions are formed to have substantially same projection heights, and
the second concave portions and the third concave portions are formed to have substantially same projection heights.

The catalyst carriers, as shown in Figures 4 to 6, further comprise flat rack portions arranged between the first concave portions and the second concave portions and extend along the first direction to connect adjacent first and second concave portions.

End portions of cuttings for partitioning the third concave portions may be positioned on boundary portions between the first concave portions and the rack portions, and end portions of cuttings for partitioning the fourth concave portions may be positioned on boundary portions between the second concave portions and the rack portions.

The third concave portions and the fourth concave portions are provided in plural along the first direction respectively.

In Figures 7 and 8, a predetermined distance may be provided between the end portions of cuttings for partitioning the third concave portions and the end portions of cuttings for partitioning the fourth concave portions along the first direction.

In general, with reference to the first embodiment, the tooth portion of the engaging plate which engages with the inlet side end edge of the catalyst carrier can suppress mutual separation and shift of the linear portions of adjacent catalyst carriers. Therefore, the aperture opening phenomenon that the catalyst carriers are separated mutually at the center area of the core because of a flow-in pressure of the exhaust gas to the inlet side edge face of the core (inlet side edge face of the catalyst carriers) can be prevented. Hence, the honeycomb profile in the core is difficult to deform and thus the cells in the core can be held in a desired shape. As a result, purification performance of the exhaust gas can be improved.

Since the tooth portion of the engaging plate and the inlet side edge end of the catalyst carriers are welded, rigidity of the catalyst carriers in the neighbourhood of the inlet side edge face of the core, which receive the flow-in pressure of the exhaust gas, can be enhanced. Therefore, endurance of the core can be improved.

Also, since the engaging plate and the outer cylinder are welded, the engaging plate is never shifted with respect to the outer cylinder and the core by the flow-in pressure of the exhaust gas. Consequently, the catalyst carriers can be clamped surely mutually by the engaging plate.

In general, with reference to the second to fourth embodiments, the first and second cores are installed in the first and second container spaces in the outer cylinder, which are partitioned by the partition plates, and the linear portions of the catalyst carrier extends in the direction intersecting with the partition members. Therefore, if the catalyst converter is compared with the catalyst converter in which the partition plates are not provided and one core is installed in one container space, lengths of the linear portions of the catalyst carrier can be reduced shorter and therefore deflection rigidity of the linear portions of the catalyst carrier can be enhanced.

Accordingly, the aperture opening phenomenon that the catalyst carriers are separated mutually by the flow-in pressure of the exhaust gas flowing into the inlet side end face of the cores (inlet side end face of the catalyst carrier) can be prevented without fail. Hence, the honeycomb profiles in the cores scarcely deform, and thus the cells in the cores can be held in desired shapes. As a result, purification performance of the exhaust gas can be improved.

The exhaust gas which flows in from the inlet of the outer cylinder can pass through the connection portion of the partition member, and then flow through the first core in the first container space and the second core in the second container space. As a consequence, the exhaust gas can be distributed substantially uniformly into the cores, so that catalytic reaction can be made more active. As a result, purification performance of the exhaust gas can be further improved. Also, the pressure distribution of the exhaust gas in respective cores can be made substantially uniformly. As a result, endurance of the cores can be improved.

The inside of the outer cylinder is partitioned into two container spaces merely by one sheet of the metal thin plate. Therefore, in this third embodiment, there is saving in cost.

The exhaust gas which flows in from the inlet of the outer cylinder in the fourth embodiment can pass through meshes of the mesh member and then pass through between the first core in the first container space and the second core in the second container space. Consequently, the exhaust gas can be distributed substantially uniformly into the cores, so that catalytic reaction can be made more active. As a result, purification performance of the exhaust gas can be further improved. Also, the pressure distribution of the exhaust gas can be spread substantially uniformly overall areas of the cores, and therefore endurance of the cores can be improved. In addition, an interior of the outer cylinder is partitioned into two container spaces by a sheet of the mesh member. Hence, this embodiment is advantageous in cost.

Catalytic reaction can be made more active on the partition member in addition to the catalyst carrier. As a result, purification performance of the exhaust gas can be further improved.

The core is formed by folding successively a sheet of catalyst carrier to form S-shapes and then stacking the folded catalyst carrier to form a honeycomb structure, so that the core can be formed easily. Therefore, the film-out phenomenon that the catalyst carrier is projected out backward from the outlet of the outer cylinder by the flow-in pressure of the exhaust gas can be prevented.

The first concave portions have third concave portions which are partitioned by two cuttings separated at a distance along the first direction and folded to protrude partially to other face side of the catalyst carrier, and the second concave portions have fourth concave portions which are partitioned by two cuttings separated at a distance along the first direction and folded to protrude partially to one face side of the catalyst carrier. The cuttings of the first concave portions are opened by forming the third concave portions. The cuttings of the second concave portions are opened by forming the fourth concave portions. For this reason, the exhaust gas flowing along the first direction can pass through the opened cuttings of the first and second concave portions, and then flow to thread passages between one face and the other face of the catalyst carrier. Therefore, because the exhaust gas can contact sufficiently with catalyst on one face and the other face of the catalyst carrier, the catalytic reaction can be made more active.

Further, because of the presence of the third and fourth concave portions, mutual tight contact of adjacent catalyst carriers can be prevented. Therefore, the cells can be firmly formed between adjacent catalyst carriers.

As a result, purification performance of the exhaust gas can be further improved.

As described above, since the exhaust gas can pass through the opened cuttings and flow to thread the passages between one face and the other face of the catalyst carriers, pressure distribution of the exhaust gas can be spread substantially uniformly over all area of the core. Therefore, endurance of the core can be improved.

Since the third and fourth concave portions are formed, rigidity of the catalyst carriers can be enhanced.

The first concave portions and the fourth concave portions are formed to have substantially same projection heights, and the second concave portions and the third concave portions are formed to have substantially same projection heights. Therefore, the opening area of the cuttings can be enhanced and also flowability of the exhaust gas between one face and the other face of the catalyst carrier can be improved.

Also, since the third concave portions are substantially same in height as the second concave portions and the fourth concave portions are substantially same in height as the first concave portions, mutual tight contact between adjacent catalyst carriers can be prevented without fail.

In adjacent first and second concave portions, end portions of cuttings for partitioning the third concave portions and end portions of cuttings for partitioning the fourth concave portions can be separated surely by a width of the rack portion along the second direction. Therefore, even if difference in the coefficient' of thermal expansion is generated between adjacent first and second concave portions, breaking of end portions of adjacent cuttings can be avoided.

In adjacent first and second concave portions, end portions of cuttings for partitioning the third concave portions and end portions of cuttings for partitioning the fourth concave portions can be separated surely by a width of the rack portion along the first direction. Therefore, even if difference in the coefficient of thermo expansion is generated between adjacent first and second concave portions, breaking of end portions of adjacent cuttings can be avoided.

## Claims

1. A catalytic converter comprising:
a cylindrical member (2) having an inlet, an outlet and an inner surface; and
a core (3) comprising a plurality of catalyst carrier sheets (5; 21; 22; 23) provided in the cylindrical member (2) and arranged in substantially parallel relationship such that each sheet extends between portions of the inner surface, and adjacent said sheets define a plurality of cells therebetween on a fluid flow path between the inlet and the outlet;
**characterised by** an engaging plate (6) engaging with and extending between respective inlet side portions of the sheets (5,21,22,23) for maintaining a predetermined relative orientation of said sheets to prevent an aperture opening phenomenon of the core (3), the sheets (5; 21; 22; 23) intersecting substantially orthogonally with the engaging plate (6).

2. A converter according to claim 1, wherein a tooth portion (7) of the engaging plate (6) is welded to the inlet side portions of the sheets.

3. A converter according to claim 1, wherein the cylindrical member (2) has two opposing slits (8a, 8b) in respective inlet end edges thereof, and
the engaging plate is welded into the slits.

4. A converter according to claim 1, wherein the sheets (5; 21; 22; 23) are folded to form S-shapes.

5. A converter according to claim 1, wherein each sheet (5; 21; 22; 23) is shaped to provide a plurality of first ridge portions (5a) and a plurality of first groove portions (5b), wherein
the first ridge portions are folded to protrude on one side of the sheet and extend along a first direction (60),
the first groove portions are folded to protrude on the other side of the sheet and extend along said first direction,
the first ridge portions and the first groove portions are arranged alternatively along a second direction (61) intersecting with the first direction to form a corrugated shape,
the first ridge portions have second groove portions (5d), each of which is partitioned by two cuttings separated at a distance in the first direction and then folded to protrude partially on said other side of the sheet, and
the first groove portions have second ridge portions (5e), each of which is partitioned by two cuttings separated at a distance in the first direction and then folded to protrude partially on said one side of the sheet.

6. A converter according to claim 5, wherein the first ridge portions (5a) and the second ridge portions (5e) protrude to substantially the same extent on said one side of the sheet (5; 21; 22; 23), and
the first groove portions (5b) and the second groove portions (5d) protrude to substantially the same extent on said other side of the sheet.

7. A converter according to claim 5, further comprising flat portions (5c) arranged between the first ridge portions (5a) and the first groove portions (5b) and extend along the first direction (60) to connect adjacent first ridge and first groove portions.

8. A converter according to claim 7, wherein end portions of the cuttings for partitioning the second ridge portions (5e) are positioned on boundary portions between the first ridge portions (5a) and the flat portions (5c), and
end portions of the cuttings for partitioning the second groove portions (5d) are positioned on boundary portions between the first groove portions (5b) and the flat portions (5c).

9. A converter according to claim 5, wherein a plurality of the second ridge portions (5e) and a plurality of the second groove portions (5d) are provided along the first direction (60), respectively.

10. A converter according to claim 9, wherein a predetermined distance is provided between the end portions of the cuttings for partitioning the second ridge portions (5e) and the end portions of the cuttings for partitioning the second groove portions (5d) along the first direction (60).

11. A catalytic converter comprising:
a cylindrical member (2) having an inlet, an outlet and an inner surface defining an inner space of the cylindrical member;
partition means (16, 17; 18; 20) extending between portions of the inner surface to partition the inner space into a first container space and a second container space, each of said spaces communicating with said inlet and said outlet;
wherein provided in the first container space (14a) is a first core (13a) comprising a first plurality of catalyst carrier sheets (5; 21; 22; 23) disposed in substantially parallel relationship, adjacent sheets of said first plurality of sheets defining a plurality of cells therebetween on a fluid flow path between the inlet and the outlet; and
wherein provided in the second container space (14b) is a second core (13b) comprising a second plurality of sheets (5; 21; 22; 23) disposed in substantially parallel relationship, adjacent sheets of said second plurality of sheets defining a plurality of cells therebetween on a fluid flow path between the inlet and the outlet;
**characterised in that** each sheet of said first plurality of sheets (5;21;22;23) extends between the inner surface and the partition means (16;17;18;20), each sheet of said second plurality of sheets extends between the inner surface and the partition means (16;17;18;20), the first and second sheets (5; 21; 22; 23) intersect substantially orthogonally with the partition means (16, 17; 18; 20), the arrangement preventing an aperture opening phenomenon of and/or improves purification performance of exhaust gas from the first and the second cores (13a, 13b).

12. A converter according to claim 11, wherein the partitioning member (16, 17; 18; 20) has a communication means for allowing communication between the first (14a) and second (14b) container spaces.

13. A converter according to claim 12, wherein the partitioning member (16, 17; 18; 20) is made of thin metal plates (16, 17), and
the connection means is a clearance (10) formed between the plates.

14. A converter according to claim 12, wherein the partitioning member is made of a metal thin plate (18), and
the connection means are connection holes (19) formed in the metal thin plate.

15. A converter according to claim 12, wherein the partitioning member (16, 17; 18; 20) is made of a mesh material (20).

16. A converter according to claim 12, wherein the partitioning member (16, 17; 18; 20) has catalyst on its surface.

17. A converter according to claim 12, wherein the first and second sheets (5; 21; 22; 23) are folded to form S-shapes.

18. A converter according to claim 12, wherein each of the sheets (5; 21; 22; 23) of the first and the second plurality of sheets have first ridge portions (5a) and first groove portions (5b), wherein
the first ridge portions are folded to protrude on one side of the sheet and extend along a first direction (60),
the first groove portions are folded to protrude on the other side of the sheet and extend along said first direction,
the first ridge portions and the first groove portions are arranged alternatively along a second direction (61) intersecting with the first direction to form a corrugated shape,
the first ridge portions have second groove portions (5d), each of which is partitioned by two cuttings separated at a distance in the first direction and then folded to protrude partially on said other side of the sheet, and
the first groove portions have second ridge portions (5e), each of which is partitioned by two cuttings separated at a distance in the first direction and then folded to protrude partially on said one side of the sheet.

## Patentansprüche

1. Katalysator, aufweisend:
ein zylindrisches Element (2) mit einem Einlaß, einem Auslaß und einer Innenfläche, und
einen Kern (3) mit mehreren Katalysator-Trägerblättern (5; 21; 22; 23), die in dem zylindrischen Element (2) vorgesehen und im wesentlichen paralleler Beziehung angeordnet sind, so daß jedes Blatt zwischen Abschnitten der Innenfläche verläuft, und benachbarte Blätter zwischen sich mehrere Zellen auf einem Fluid-Strömungsweg zwischen dem Einlaß und dem Auslaß festlegen,
**gekennzeichnet durch** eine Angriffsplatte (6), die an entsprechenden einlaßseitigen Abschnitten der Blätter (5; 21; 22; 23) angreift und zwischen diesen verläuft, um eine vorbestimmte relative Orientierung der Blätter beizubehalten und ein Apertur-Öffnungsphänomen für den Kern (3) zu verhindern,
wobei die Blätter (5; 21; 22; 23) die Angriffsplatte (6) im wesentlichen orthogonal schneiden.

2. Katalysator nach Anspruch 1, wobei ein Zahnabschnitt (7) der Angriffsplatte (6) an einlaßseitige Abschnitte der Blätter geschweißt ist.

3. Katalysator nach Anspruch 1, wobei
das zylindrische Element (2) zwei einander gegenüberliegende Schlitze (8a, 8b) in seinen entsprechenden Einlaßendkanten aufweist und
die Angriffsplatte in die Schlitze geschweißt ist.

4. Katalysator nach Anspruch 1, wobei die Blätter (5; 21; 22; 23) unter Bildung von S-Formen gefaltet sind.

5. Katalysator nach Anspruch 1, wobei jedes Blatt (5; 21; 22; 23) so geformt ist, daß mehrere erste Rückenabschnitte (5a) und mehrere erste Rinnenabschnitte (5b) bereitgestellt (5a) und mehrere erste Rinnenabschnitte (5b) bereitgestellt werden, wobei
die ersten Rückenabschnitte so gefaltet sind, daß sie auf einer Seite des Blatts vorstehen und entlang einer ersten Richtung (60) verlaufen,
die ersten Rinnenabschnitte so gefaltet sind, daß sie auf der anderen Seite des Blatts vorstehen und entlang der ersten Richtung verlaufen,
die ersten Rückenabschnitte und die ersten Rinnenabschnitte in einer zweiten die erste Richtung schneidenden Richtung (61) unter Bildung einer Wellenform abwechselnd angeordnet sind,
die ersten Rückenabschnitte zweite Rinnenabschnitte (5d) aufweisen, die jeweils durch zwei über einen Abstand in der ersten Richtung getrennte Schnitte abgeteilt und dann so gefaltet sind, daß sie teilweise auf der genannten anderen Seite des Blatts vorstehen, und
die ersten Rinnenabschnitte zweite Rückenabschnitte (5e) aufweisen, die jeweils durch zwei über einen Abstand in der ersten Richtung getrennte Schnitte abgeteilt und dann so gefaltet sind, daß sie teilweise auf der genannten einen Seite des Blatts vorstehen.

6. Katalysator nach Anspruch 5, wobei die ersten Rückenabschnitte (5a) und die zweiten Rückenabschnitte (5e) in im wesentlichen dem gleichen Ausmaß auf der genannten einen Seite des Blatts (5; 21; 22; 23) vorstehen, und
die ersten Rinnenabschnitte (5b) und die zweiten Rinnenabschnitte (5d) in im wesentlichen dem gleichen Ausmaß auf der anderen Seite des Blatts vorstehen.

7. Katalysator nach Anspruch 5 mit flachen Abschnitten (5c), die zwischen den ersten Rückenabschnitten (5a) und den ersten Rinnenabschnitten (5b) angeordnet sind und in der ersten Richtung (60) so verlaufen, daß sie benachbarte erste Rücken- und erste Rinnenabschnitte verbinden.

8. Katalysator nach Anspruch 7, wobei Endabschnitte der Schnitte zum Abteilen der zweiten Rückenabschnitte (5e) auf Grenzabschnitten zwischen den ersten Rückenabschnitten (5a) und den flachen Abschnitten (5c) angeordnet sind, und
Endabschnitte der Schnitte zum Abteilen der zweiten Rinnenabschnitte (5d) auf Grenzabschnitten zwischen den ersten Rinnenabschnitten (5b) und den flachen Abschnitten (5c) angeordnet sind.

9. Katalysator nach Anspruch 5, wobei jeweils mehrere der zweiten Rückenabschnitte (5e) und mehrere der zweiten Rinnenabschnitte (5d) entlang der ersten Richtung (60) vorgesehen sind.

10. Katalysator nach Anspruch 9, wobei zwischen den Endabschnitten der Schnitte zum Abteilen der zweiten Rückenabschnitte (5e) und den Endabschnitten der Schnitte zum Abteilen der zweiten Rinnenabschnitte (5d) ein vorbestimmter Abstand entlang der ersten Richtung (60) vorgesehen ist.

11. Katalysator, aufweisend:
ein zylindrisches Element (2) mit einem Einlaß, einem Auslaß und einer einen Innenraum des zylindrischen Elements festlegenden Innenfläche,
eine Abteileinrichtung (16, 17; 18; 20), die zwischen Abschnitten der Innenfläche verläuft, um den Innenraum in einen ersten Behälterraum und einen zweiten Behälterraum zu unterteilen, die jeweils mit dem Einlaß und dem Auslaß in Verbindung stehen,
wobei im ersten Behälterraum (14a) ein erster Kern (13a) vorgesehen ist, der eine erste Vielzahl an Katalysatorträgerblättern (5; 21; 22; 23) in im wesentlichen paralleler Beziehung angeordnet aufweist, wobei benachbarte Blätter der ersten Vielzahl an Blättern zwischen sich eine Vielzahl an Zellen auf einem Fluid-Strömungsweg zwischen dem Einlaß und dem Auslaß festlegen, und
wobei in dem zweiten Behälterraum (14b) ein zweiter Kern (13b) vorgesehen ist, der eine zweite Vielzahl an Blättern (5; 21; 22; 23) in im wesentlichen paralleler Beziehung angeordnet aufweist, wobei benachbarte Blätter der zweiten Vielzahl an Blättern zwischen sich eine Vielzahl an Zellen auf einem Fluid-Strömungsweg zwischen dem Einlaß und dem Auslaß festlegen,
**dadurch gekennzeichnet, daß** jedes Blatt der ersten Vielzahl an Blättern (5; 21; 22; 23) zwischen der Innenfläche und der Abteileinrichtung (16; 17; 18; 20) verläuft, jedes Blatt der zweiten Vielzahl an Blättern zwischen der Innenfläche und der Abteileinrichtung (16; 17; 18; 20) verläuft, die ersten und die zweiten Blätter (5; 21; 22; 23) die Abteileinrichtung (16, 17; 18; 20) im wesentlichen orthogonal schneiden und die Anordnung für den ersten und den zweiten Kern (13a, 13b) ein Apertur-Öffnungsphänomen verhindert und/oder eine Abgas-Reinigungswirkung verbessert.

12. Katalysator nach Anspruch 11, wobei die Abteileinrichtung (16, 17; 18; 20) eine Verbindungseinrichtung aufweist, um eine Verbindung zwischen dem ersten (14a) und dem zweiten (14b) Behälterraum zu erlauben.

13. Katalysator nach Anspruch 12, wobei das Abteilelement (16, 17; 18; 20) aus dünnen Metallplatten (16, 17) gebildet ist, und
die Verbindungseinrichtung ein zwischen den Platten gebildeter Freiraum ist.

14. Katalysator nach Anspruch 12, wobei das Abteilelement aus einer dünnen Metallplatte (18) hergestellt ist, und
die Verbindungseinrichtung in der dünnen Metallplatte ausgebildete Verbindungslöcher (19) darstellt.

15. Katalysator nach Anspruch 12, wobei das Abteilelement (16, 17; 18; 20) aus einem Netzmaterial (20) hergestellt ist.

16. Katalysator nach Anspruch 12, wobei das Abteilelement (16, 17; 18; 20) auf seiner Oberfläche einen Katalysator aufweist.

17. Katalysator nach Anspruch 12, wobei das erste und das zweite Blatt (5; 21; 22; 23) unter Bildung von S-Formen gefaltet sind.

18. Katalysator nach Anspruch 12, wobei die Blätter (5; 21; 22; 23) der ersten und der zweiten Vielzahl an Blättern erste Rückenabschnitte (5a) und erste Rinnenabschnitte (5b) aufweisen, wobei
die ersten Rückenabschnitte so gefaltet sind, daß sie auf einer Seite des Blatts vorstehend und in eine erste Richtung (60) verlaufen,
die ersten Rinnenabschnitte so gefaltet sind, daß sie auf der anderen Seite des Blatts vorstehen und entlang der ersten Richtung verlaufen,
die ersten Rückenabschnitte und die ersten Rinnenabschnitte in einer die erste Richtung schneidenden zweiten Richtung (61) abwechselnd angeordnet sind, um eine Wellenform zu bilden,
die ersten Rückenabschnitte zweite Rinnenabschnitte (5d) aufweisen, die jeweils durch zwei über einen Abstand in der ersten Richtung getrennte Schnitte abgeteilt und dann so gefaltet sind, daß sie teilweise auf der genannten anderen Seite des Blatts vorstehen, und
die ersten Rinnenabschnitte zweite Rückenabschnitte (5e) aufweisen, die jeweils durch zwei über einen Abstand in der ersten Richtung getrennte Schnitte abgeteilt sind und dann so gefaltet sind, daß sie teilweise auf der genannten einen Seite des Blatts vorstehen.

## Revendications

1. Pot catalytique, comprenant :
un élément cylindrique (2) ayant une entrée, une sortie et une surface intérieure ; et
un coeur (3) comportant une pluralité de tôles de support (5 ; 21 ; 22 ; 23) de catalyseur placées dans l'élément cylindrique et (5 ; 21 ; 22 ; 23) et disposées sensiblement parallèlement de façon que chaque tôle s'étende entre des parties de la surface intérieure, et que lesdites tôles adjacentes définissent entre elles une pluralité de cellules sur un trajet d'écoulement de fluide entre l'entrée et la sortie ;
**caractérisé par** une plaque de contact (6) au contact et entre des parties latérales d'entrée respectives des tôles pour maintenir une orientation relative prédéterminée desdites tôles afin d'empêcher un phénomène d'ouverture d'orifices du coeur (3), les tôles (5 ; 21 ; 22 ; 23) croisant la plaque de contact (6) sensiblement à angle droit.

2. Pot catalytique selon la revendication 1, dans lequel une partie dentée (7) de la plaque de contact (6) est soudée aux parties latérales d'entrée des tôles.

3. Pot catalytique selon la revendication 1, dans lequel l'élément cylindrique (2) comporte deux fentes opposées (8a, 8b) dans des bords d'extrémités d'entrée respectifs de celui-ci, et
la plaque de contact est soudée dans les fentes.

4. Pot catalytique selon la revendication 1, dans lequel les tôles (5 ; 21 ; 22 ; 23) sont pliées pour constituer des formes en S.

5. Pot catalytique selon la revendication 1, dans lequel chaque tôle (5 ; 21 ; 22 ; 23) est façonnée pour présenter une pluralité de premières parties formant crêtes (5a) et une pluralité de premières parties formant gorges (5b), dans lequel
les premières parties formant crêtes sont pliées pour faire saillie sur une première face de la tôle et s'étendent dans une première direction (60),
les premières parties formant gorges sont pliées de façon à faire saillie sur l'autre face de la tôle et s'étendent dans ladite première direction,
les premières parties formant crêtes et les premières parties formant gorges sont disposées en alternance dans une deuxième direction (61) croisant la première direction pour constituer une forme ondulée,
les premières parties formant crêtes ont des deuxièmes parties formant gorges (5d) dont chacune est divisée par deux entailles séparées d'une certaine distance dans la première direction, puis est pliée pour faire partiellement saillie sur ladite autre face de la tôle, et
les premières parties formant gorges ont des deuxièmes parties formant crêtes (5e) dont chacune est divisée par deux entailles séparées d'une certaine distance dans la première direction, puis pliée pour faire partiellement saillie sur ladite première face de la tôle.

6. Pot catalytique selon la revendication 5, dans lequel les premières parties formant crêtes (5a) et les deuxièmes parties formant crêtes (5e) font saillie sensiblement dans la même mesure sur ladite première face de la tôle (5 ; 21 ; 22 ; 23), et
les premières parties formant gorges (5b) et les deuxièmes parties formant gorges (5d) font saillie sensiblement dans la même mesure sur ladite autre face de la tôle.

7. Pot catalytique selon la revendication 5, comprenant en outre des parties planes (5c) disposées entre les premières parties formant crêtes (5a) et les premières parties formant gorges (5b) et s'étendent dans la première direction (60) pour relier des premières parties formant crêtes et premières parties formant gorges adjacentes.

8. Pot catalytique selon la revendication 7, dans lequel des parties d'extrémités des entailles servant à diviser les deuxièmes parties formant crêtes (5e) sont situées à des limites entre les premières parties formant crêtes (5a) et les parties planes (5c), et
des parties d'extrémités des entailles servant à diviser les deuxièmes parties formant gorges (5d) sont situées dans des parties formant limites entre les premières parties formant gorges (5b) et les parties planes (5c).

9. Pot catalytique selon la revendication 5, dans lequel une pluralité des secondes parties formant crêtes (5e) et une pluralité des secondes parties formant gorges (5d) sont respectivement disposées dans la première direction (60).

10. Pot catalytique selon la revendication 9, dans lequel une distance prédéterminée est établie entre les parties d'extrémités des entailles servant à diviser les secondes parties formant crêtes (5e) et les parties d'extrémités des entailles pour séparer les deuxièmes parties formant gorges (5d) dans la première direction (60).

11. Pot catalytique, comprenant :
un élément cylindrique (2) ayant une entrée, une sortie et une surface intérieure définissant un espace intérieur de l'élément cylindrique ;
des moyens formant cloisons (16, 17 ; 18 ; 20) s'étendant entre des parties de la surface intérieure pour diviser l'espace intérieur en un premier espace de logement et un deuxième espace de logement, chacun desdits espaces communiquant avec ladite entrée et ladite sortie ;
dans lequel, dans le premier espace de logement (14a) est disposé un premier coeur (13a) comportant une première pluralité de tôles (5 ; 21 ; 22 ; 23) de support de catalyseur disposées sensiblement parallèlement les unes aux autres, des tôles adjacentes de ladite première pluralité de tôles définissant entre elles une pluralité de cellules sur un trajet d'écoulement de fluide entre l'entrée et la sortie ; et
dans lequel, dans le deuxième espace de logement (14b) est présent un deuxième coeur (13b) comportant une deuxième pluralité de tôles (5 ; 21 ; 22 ; 23) disposées de manière sensiblement parallèle les unes aux autres, des tôles adjacentes de ladite deuxième pluralité de tôles définissant entre elles une pluralité de cellules sur un trajet d'écoulement de fluide entre l'entrée et la sortie ;
**caractérisé en ce que** chaque tôle de ladite première pluralité de tôles (5 ; 21 ; 22 ; 23) s'étend entre la surface intérieure et les moyens formant cloisons (16, 17 ; 18 ; 20), chaque tôle de ladite deuxième pluralité de tôles s'étend entre la surface intérieure et les moyens formant cloisons (16, 17 ; 18 ; 20), les premières et deuxièmes tôles (5 ; 21 ; 22 ; 23) croisent de manière sensiblement perpendiculaire les moyens formant cloisons (16, 17 ; 18 ; 20), et l'agencement empêchant un phénomène d'ouverture d'orifices dans le premier et le deuxième coeurs (13a, 13b) et/ou améliorant les performances d'épuration des gaz d'échappement sortant du premier et du deuxième coeurs (13a, 13b).

12. Pot catalytique selon la revendication 11, dans lequel le moyen de division (16, 17 ; 18 ; 20) comporte un moyen de communication permettant une communication entre les premier (14a) et deuxième (14b) espaces de logement.

13. Pot catalytique selon la revendication 12, dans lequel l'élément de division (16, 17 ; 18 ; 20) est constitué par de minces plaques métalliques (16, 17), et
le moyen de liaison est un intervalle (10) ménagé entre les plaques.

14. Pot catalytique selon la revendication 12, dans lequel l'élément de positionnement est constitué par une mince plaque métallique (18), et
les moyens de liaison sont des trous de liaison (19) formés dans la mince plaque métallique.

15. Pot catalytique selon la revendication 12, dans lequel l'élément de division (16, 17 ; 18 ; 20) est constitué par une matière maillée (20).

16. Pot catalytique selon la revendication 12, dans lequel l'élément de division (16, 17 ; 18 ; 20) comporte un catalyseur sur sa surface.

17. Pot catalytique selon la revendication 12, dans lequel les premières et deuxièmes tôles (5 ; 21 ; 22 ; 23) sont pliées pour constituer des formes en S.

18. Pot catalytique selon la revendication 12, dans lequel chacune des tôles (5 ; 21 ; 22 ; 23) de la première et de la deuxième pluralité de tôles ont des premières parties formant crêtes (5a) et des premières parties formant gorges (5b), dans lequel
les premières parties formant crêtes sont pliées pour faire saillie sur une première face de la tôle et s'étendent dans une première direction (60),
les premières parties formant gorges sont pliées pour faire saillie sur l'autre face de la tôle et s'étendent dans ladite première direction,
les premières parties formant crêtes et les premières parties formant gorges sont disposées en alternance dans une deuxième direction (61) croisant la première direction pour constituer une forme ondulée,
les premières parties formant crêtes ont des deuxièmes parties formant gorges (5d) dont chacune est divisée par deux entailles séparées d'une certaine distance dans
la première direction, puis pliée pour faire partiellement saillie sur ladite autre face de la tôle, et
les premières parties formant gorges ont des deuxièmes parties formant crêtes (5e) dont chacune est divisée par deux entailles séparées d'une certaine distance dans la première direction, puis est pliée pour faire partiellement saillie sur ladite première face de la tôle.
